Europäisches Patentamt

European Patent Office

Office européen des brevets

(19)

(11) Publication number : **0 677 725 A1**

## (12) EUROPEAN PATENT APPLICATION

(21) Application number : 95400830.6

(22) Date of filing : 12.04.95

(51) Int. Cl.⁶ : **G01L 1/22,** G01D 18/00, G01K 7/20

(30) Priority : 15.04.94 US 228511
17.08.94 US 291871

(43) Date of publication of application :
18.10.95 Bulletin 95/42

(84) Designated Contracting States :
DE ES FR GB IT

(71) Applicant : SSI TECHNOLOGIES, INC.
P.O.Box 5011
Janesville, Wisconsin 53547 (US)

(72) Inventor : Mattes, Michael F.
2702 Harvard Drive
Janesville, Wisconsin 53546 (US)
Inventor : Chao, Robert L.
415 Tasman Drive
Sunnyvale, California 94089 (US)

(74) Representative : Jacquard, Philippe et al
CABINET ORES,
6, Avenue de Messine
F-75008 Paris (FR)

(54) Improved electronic circuit for a transducer.

(57)    A transducer for generating an amplified signal in response to a stimulus. The transducer includes a sensing structure (12) for sensing a stimulus and for generating a signal functionally related to the stimulus. An amplifier circuit (42), utilizing a single amplifier, amplifies the signal by a predetermined gain. Resistive elements ($R_{in}$, $R_{offsett}$, $R_f$) in the amplifier circuit (54) are formed on the same substrate as the sensing structure and define the predetermined gain of the amplifier circuit (54). The transducer generates a signal having zero magnitude in response to zero pressure on the sensing structure and has fewer than seven resistors requiring laser trimming.

FIG. 2

EP 0 677 725 A1

This invention relates to transducers, and in particular, to transducers having a full-bridge sensing structure and an amplifier circuit connected to the sensing structure.

Transducers, in particular, transducers incorporating a full-bridge (also called a "wheatstone" bridge) sensing structure are used in a variety of areas including automotive and industrial applications to measure pressures, temperatures and other parameters. In automobiles for example, pressure sensors monitor, among other things, oil pressure and transmission fluid pressure.

It is known to include in such a transducer a full-bridge sensing structure to generate a differential voltage output in response to a stimulus and an amplifier circuit connected to the sensing structure to amplify the differential voltage output. Using the pressure sensor example from above, the sensing structure senses a pressure within a system and generates a signal functionally related to that pressure. The signal is then amplified and provided as the output of the transducer.

It is also known in the art to calibrate the output of an integrated circuit transducer through the process of laser trimming of resistors in the circuit. Laser trimming is achieved by making laser cuts in the polysilicon resistor material to increase the resistance of the resistor in the circuit and thereby modifying in a precise way the characteristics of the circuit.

In one known construction, the sensing structure and the amplifier circuitry are provided as discreet or separate integrated circuit components. However this construction substantially increases the cost of manufacturing the sensor because both the sensing bridge resistors and the amplifier biasing resistors require laser trimming or calibration prior to connecting the circuits together to form the complete transducer circuit. Moreover, once the sensing bridge and the amplifier circuit are electrically connected, testing and additional trimming or calibration is required to assure that the two circuits are appropriately matched and that the sensor is functioning properly.

One attempt to solve the above-identified problems led to the development of a fully integrated pressure sensor as shown in the Motorola Semiconductor Technical Data Sheet illustrating a Motorola "MPX5050" Pressure Sensor. However, to insure accuracy of the pressure sensor output signal, the amplifier circuit requires a plurality of amplifiers connected in the instrumentation mode and includes at least seven integrated resistors requiring costly laser trimming.

The invention provides a transducer including a circuit having a full-bridge sensing structure for generating an electrical output functionally related to a stimulus, an amplifier connected to the sensing structure and a plurality of biasing resistors for setting the gain of the amplifier. The entire circuit is preferably, though not necessarily, formed on a single substrate so that only two of the resistors in the entire transducer circuit require laser trimming or calibration. Additionally, the circuit requires only three external connections: one to connect the circuit to a single sided power source, one to connect the circuit to a common or ground connection and one output connection on which the output signal is provided and which is adapted to be connected to signal processing circuitry for receiving the output signal that is functionally related to the stimulus.

While not essential to the operation of the transducer circuit a buffer amplifier may be formed on the integrated circuit chip with the sensing bridge and the amplifier. The buffer amplifier is an operational amplifier connected in the voltage follower mode. The buffer amplifier isolates the voltage fed into the amplifier circuit so as to prevent excessive loading of one side of the full bridge.

A principal advantage of the invention is the provision of a transducer circuit having a sensing structure and an amplifier circuit on the same substrate.

It is another advantage of the invention to provide a circuit for a full-bridge transducer that requires only a single side power supply.

It is another advantage of the invention to provide a circuit for a full-bridge transducer where neither arm of the bridge is loaded by an inverting input to an operational amplifier.

It is another advantage of the invention to provide a transducer circuit which is simple and inexpensive to manufacture.

It is another advantage of the invention to provide a fully integrated transducer circuit utilizing a simple two amplifier circuit design to generate an accurate electronic signal functionally related to the stimulus.

It is another advantage of the invention to provide a fully integrated pressure sensor or temperature sensor, which sensor requires a minimal amount of laser trimming, i.e., calibration.

Other features and advantages of the invention will become apparent to those skilled in the art upon review of the following detailed description, claims and drawings.

Fig. 1 is an electrical schematic diagram of a transducer embodying the invention.

Fig. 2 and 3 are a partial isometric view of the transducer of Fig. 1.

Before one embodiment of the invention is explained in detail, it is to be understood that the invention is not limited in its application to the details of construction and the arrangement of components set forth in the following description or illustrated in the drawings. The invention is capable of other embodiments and of being practiced or of being carried out in various ways. Also, it is to be understood that the phraseology and terminology used herein is for the purpose of description and should not be regarded as limiting.

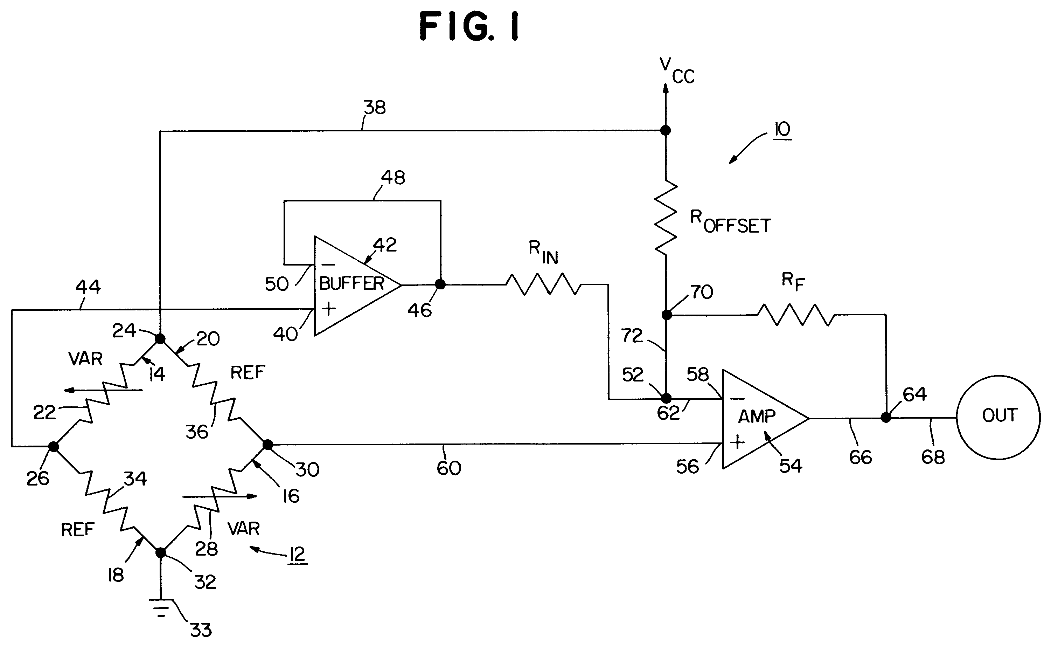

A transducer embodying the invention is generally designated by the reference number 10 in Fig. 1. The transducer includes a resistor bridge 12 having four resistor arms 14, 16, 18, and 20. In the preferred embodiment, the bridge comprises a Wheatstone bridge and, while the circuit of the invention is equally applicable for use with other types of transducers employing a full-bridge sensing structure (such as, for example, a temperature sensor), the transducer shown in the drawings is a pressure sensor. Such a pressure sensor is shown and described in U.S. Patent Nos. 4,744,863; 4,853,669; and 4,996,082; which are incorporated herein by reference.

Resistor arm 14 includes a piezoresistive element 22 which interconnects junctions 24 and 26. The resistance of the piezoresistive element 22 increases linearly with an increase in pressure exerted on the element 22.

A second piezoresistive element 28 is included in resistor arm 16. Piezoresistive element 28 interconnects junctions 30 and 32. As with piezoresistive element 22, the resistivity of piezoresistive element 28 increases linearly with an increase in pressure exerted on the bridge 12.

A first constant resistance element 34 interconnects junctions 26 and 32. Junction 32 is connected to ground 33. A second constant resistance element 36 interconnects junctions 24 and 30. Junction 24 is connected to a source voltage, $V_{cc}$, by line 38.

Junction 26 is also connected to the positive (non-inverting) input terminal 40 of an operational amplifier 42 by line 44. The output of operational amplifier 42 is supplied to junction 46. Line 48 interconnects junction 46 with the negative (inverting) input terminal 50 on operational amplifier 42. Junction 46 is also interconnected to junction 52 by an input resistor, $R_{in}$.

A second operational amplifier 54 having a positive (non-inverting) input terminal 56 and a negative (inverting) input terminal 58 is provided. Positive terminal 56 is connected to junction 30 of bridge 12 by line 60. Negative terminal 58 is connected to junction 52 by line 62. The output of operational amplifier 54 is connected to junction 64 by line 66. Line 68 carries the output signal of the transducer 10 from junction 64 to any appropriate signal monitoring circuitry. As described, operational amplifier 54, hereinafter referred to as a differential amplifier, is connected in the differential mode so as to amplify the difference between the voltage at junction 46 and the voltage at junction 30.

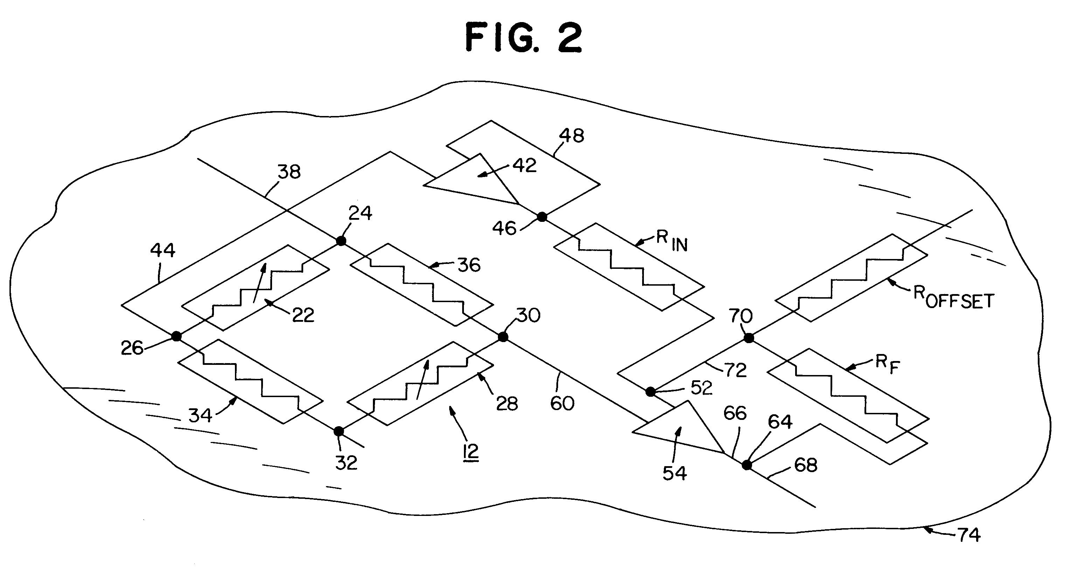

A feedback resistor, $R_f$, interconnects junction 64 and junction 70. Junction 70 and junction 52 are connected by line 72. Junction 70 is also connected to voltage source, $V_{cc}$, through offset resistor, $R_{OFFSET}$. In the preferred embodiment, offset resistor $R_{OFFSET}$ has a resistance substantially equal to the resistance of the feedback resistor $R_f$. As shown in Fig. 2, the resistors $R_{in}$, $R_{OFFSET}$ and $R_f$ are formed of a thin film of polysilicon on the same substrate as sensing bridge 12 and operational amplifier 54 of an integrated circuit chip. Because of the simplicity of the circuit, only the resistors $R_{OFFSET}$ and $R_f$ require calibration through laser trimming.

In operation, the substrate 72 including the transducer circuit 10 is positioned in the system of pressure to be measured. At zero pressure, piezoresistive elements 22 and 28 have the same resistance as the constant resistance elements 34 and 36. As a result of the voltage dividing action of bridge 12, the voltage at junction 26 will be equal to one-half the source voltage $V_{cc}$. Likewise, since piezoresistive element 28 and constant resistance element 36 have the same resistance at zero pressure, the voltage at junction 30 is equal to one-half the source voltage $V_{cc}$.

Operational amplifier 42 is connected in a voltage follower configuration to act as a buffer amplifier. Buffer amplifier 42 isolates the voltage at line 40 from differential amplifier 54 so as to prevent excess current loading of junction 26. The output voltage of buffer amplifier 42 at junction 46 is substantially equal to the input voltage at terminal 40 of buffer amplifier 42.

Differential amplifier 54 is designed to produce an amplified signal corresponding to the difference between the voltages at junction 26 and junction 30 of bridge 12. The following equation represents the output voltage of differential amplifier 54 at junction 64:

$$\text{Output} = \left[ 1 + \frac{R_f}{R_{parallel}} \right] \times V_{pbridge} - \left[ \frac{R_f}{R_{in}} \right] \times V_{nbridge} - \left[ \frac{R_f}{R_{offset}} \right] \times V_{cc}$$

wherein:

$R_{OFFSET}$ = Resistance of $R_{OFFSET}$

3

$R_{IN}$ = Resistance of $R_{IN}$

$R_f$ = Resistance of $R_{FEEDBACK}$

$$R_{parallel} = \frac{(R_{in}) \times R_{OFFSET}}{(R_{in}) + R_{OFFSET}}$$

$V_{pbridge}$ = Voltage at junction 30 of bridge 12

$V_{nbridge}$ = Voltage at junction 46

$V_{cc}$ = Source voltage

As previously discussed, at zero pressure, the voltage at junction 46 is substantially equal to one-half the source voltage, $V_{cc}$. Likewise, the voltage at junction 30 is equal to one-half the source voltage, $V_{cc}$. The resistance of the feedback resistor $R_f$ is equal to the resistance of the offset resistor $R_{OFFSET}$ at all pressures. The resistance of the feedback resistor is also equal to the input resistor $R_{in}$ multiplied by the desired gain. By substitution in the above described equation, it is determined that at zero pressure, the circuit is designed to produce an output signal of zero volts at junction 64. As such, at zero pressure, the output signal at junction 64 is initialized. In cases where the transducer circuit 10 is used to measure temperatures, a reference temperature can be selected at which the sensing structure is balanced and at which the output (OUT) is zero volts.

Referring again to bridge 12, an increase in pressure will increase the resistance of piezoresistive elements 22 and 28. When the resistance of piezoresistive element 28 is increased, the voltage at junction 30 is also increased. On the other hand, as the resistance of piezoresistive element 22 is increased, the voltage at junction 26 will decrease. This, in turn, lowers the voltage at junction 46. It can be seen from the above described equation that by increasing the voltage at junction 30 and by decreasing the voltage at junction 46, the output voltage of differential amplifier 54 at junction 64 will linearly increase. The maximum output voltage of differential amplifier 54 is designed to equal $V_{cc}$. $V_{cc}$ is usually five volts d.c. and, when the circuit is properly calibrated, the circuit will output five volts d.c. at the maximum pressure (or other parameter) that the transducer is designed to measure; e.g., 50-3000 psia.

In order to illustrate how the transducer circuit is calibrated, assume that the pressure sensor is designed to measure up to 500 psia and that it has a representative sensitivity of 40 microvolts per psia. Two pressures are applied to the transducer and the resulting outputs of the differential amplifier 54 are measured. These measurements yield a linear output voltage to pressure curve. The actual intercept (voltage output at zero pressure) and actual slope of the voltage output versus pressure curve are calculated (for the purposes of this example, assume that the actual slope has been calculated to be m = 0.008) and compared with the desired or ideal slope, which is:

$$
\begin{aligned}
\texttt{desired slope} \ &= \ V_{cc}/\texttt{psia}_{max} \\
&= \ 5.0 \ \texttt{Volts}/500 \ \texttt{psia} \\
&= \ 0.01
\end{aligned}
$$

A gain multiplier (k) is then calculated by dividing the actual slope into the desired slope.

$$
\begin{aligned}
\texttt{k} \ &= \ (\texttt{desired slope})/(\texttt{actual slope}) \\
&= \ 0.01/0.008 \\
&= \ 1.25
\end{aligned}
$$

Therefore, by increasing the gain by a factor of k = 1.25, the desired maximum output response is achieved. Because

$$\texttt{gain} \ = \ R_f/R_{in} \ ;$$

the gain may be increased by a factor of k = 1.25. This is achieved by laser trimming $R_f$ to achieve the desired resistance value for $R_f$.

The gain adjustment adds a "zero offset" to the output of differential amplifier 54 (i.e., at zero psia, the output voltage does not equal zero). This is eliminated by increasing $R_{offset}$ by the same factor (gain multiplier (k)) used to multiply the resistance of $R_f$.

If it is determined that, instead of increasing the gain, it is necessary to decrease the gain, then the resistance of $R_{in}$ may be adjusted (increased) instead of the resistance of $R_f$. Adjustment of $R_{in}$ will not result in any zero offset of the output of differential amplifier 54.

If the circuit is used in an environment subjected to varying temperatures, then some method of compensating for temperature induced variations of the differential output of the sensing structure should be provided. While many previously known temperature compensation circuits are appropriate, the method and apparatus of the preferred embodiment is shown and described hereinbelow.

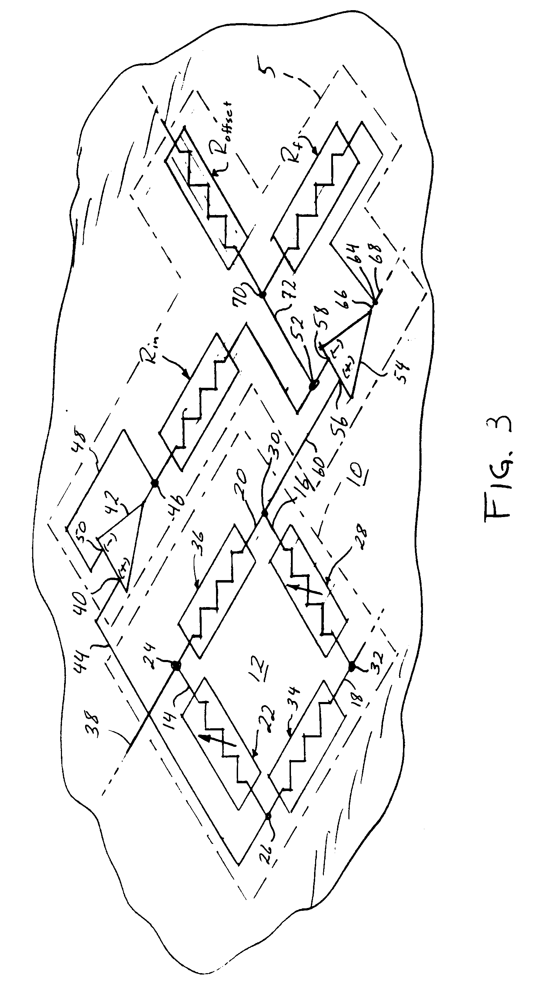

According to Figure 3, the resistivity of input resistor $R_{in}$ is inversely proportional to temperature. As temperature increases, the resistivity of input resistor $R_{in}$ decreases. Similarly, as temperature decreases, the resistivity of input resistor $R_{in}$ increases. The resistance of $R_{in}$ is defined at any temperature by the equation :

$$R_{in} = R_{in_0} [1 + \alpha_{in}(T - T_0)]$$

where:

$R_{in_0}$ = Resistance of $R_{in}$ at Room Temperature (25°C)

$\alpha_{in}$ = Temperature Coefficient of $R_{in}$

T = Operating Temperature

$T_0$ = Room Temperature (25°C)

As shown in the drawings, the gain circuit includes an operational amplifier 54 having a positive (non-inverting) input terminal 56 and a negative (inverting) input terminal 58. Positive terminal 56 is connected to junction 30 of bridge 12 by line 60. Negative terminal 58 is connected to junction 52 by line 62. The output of operational amplifier 54 is connected to junction 64 by line 66. Line 68 carries the output signal of the gain circuit 5 from junction 64. As described in greater detail below, operational amplifier 54, hereinafter referred to as a differential amplifier, is connected in the differential mode so as to amplify the difference between the voltage at junction 46 and the voltage at junction 30.

A feedback resistor, $R_f$, interconnects junction 64 and junction 70. The resistivity of feedback resistor $R_f$ is directly proportional to temperature. As temperature increases, the resistivity of feedback resistor $R_f$ increases. Similarly, as temperature decreases, the resistivity of feedback resistor $R_f$ decreases. The resistance of $R_f$ is defined at any temperature by the equation:

$$R_f = R_{f_0} [1 + \alpha_f(T - T_0)]$$

where:

$R_{f_0}$ = Resistance of $R_f$ at Room Temperature (25°C)

$\alpha_f$ = Temperature Coefficient of $R_f$

T = Operating Temperature

$T_0$ = Room Temperature (25°C)

Junction 70 and junction 52 are connected by line 72. Junction 70 is also connected to voltage source $V_{cc}$ through an offset resistor $R_{OFFSET}$. In the embodiment shown in the drawings, offset resistor $R_{OFFSET}$ has a resistivity substantially equal to the resistivity of the feedback resistor $R_f$. Like feedback resistor $R_f$, the resistivity of offset resistor $R_{OFFSET}$ is directly proportional to temperature and the temperature coefficient of $R_{OFFSET}$ is equal to the temperature coefficient of $R_f$. Therefore, as the temperature changes, the resistivity of feedback resistor $R_f$ and the resistivity of offset resistor $R_{OFFSET}$ remain substantially equal.

Differential amplifier 54 is designed to produce an amplified signal corresponding to the difference between the voltages at junction 26 and junction 30 of bridge 12. The following equation represents the output voltage of differential amplifier 54 at node 64:

$$\text{Output} = \left[ 1 + \frac{R_f}{R_{parallel}} \right] \times V_{pbridge} - \left[ \frac{R_f}{R_{in}} \right] \times V_{nbridge} - \left[ \frac{R_f}{R_{offset}} \right] \times V_{cc}$$

where:

$R_{OFFSET}$ = Resistance of $R_{OFFSET}$

$R_{IN}$ = Resistance of $R_{IN}$

$R_f$ = Resistance of $R_{FEEDBACK}$

$$R_{parallel} = \frac{(R_{in}) \times R_{OFFSET}}{(R_{in}) + R_{OFFSET}}$$

$V_{pbridge}$ = Voltage at junction 30 of bridge 12

$V_{nbridge}$ = Voltage at junction 46

$V_{cc}$ = Source voltage

At zero pressure (relative to a standard such as atmospheric pressure) and at a selected temperature (preferably room temperature, which is 25°C), the resistivity of the feedback resistor $R_f$ is equal to the resistivity of input resistor $R_{in}$ multiplied by the desired gain. The resistivity of feedback resistor $R_f$ is substantially equal to the resistivity of offset resistor $R_{OFFSET}$. By substitution in the above described equation, it is determined that at zero pressure and at the selected temperature, the circuit is designed to produce a signal of zero volts at junction 64.

The gain of differential amplifier 54 is defined by the equation:

$$\text{Gain} = \frac{R_f}{R_{in}}$$

Substituting the aforementioned equations for $R_f$ and $R_{in}$;

$$\text{Gain} = \frac{R_f}{R_{in}} = \frac{R_{f_0}[1 + \alpha_f(T - T_0)]}{R_{in_0}[1 + \alpha_{in}(T - T_0)]}$$

Therefore, the gain of the circuit is dependent upon temperature and the temperature coefficients $\alpha_f$ and $\alpha_{in}$ of the resistors $R_f$ and $R_{in}$, respectively. The temperature coefficients $\alpha_f$ and $\alpha_{in}$ are usually measured in (parts per million/°C) and their values are a function of the particular material used to form $R_f$ and $R_{in}$. By knowing (1) how the input to the differential amplifier 54 (or other characteristics of the gain circuit) will vary with temperature, (2) the mathematical formula for Gain, and (3) the temperature coefficients of selected resistor materials, the materials comprising resistors $R_f$ and $R_{in}$ may be precisely selected to vary the Gain (in any gain circuit) in response to variations in temperature thereby producing an output that is substantially independent of temperature fluctuations or, in another embodiment produce an output that varies in a known way in response to temperature.

In operation, and still using the example of a piezoresistive pressure transducer 10 connected to the gain circuit 5, the bridge 12 is positioned in the pressurized environment in which it is desired to measure pressure. At zero relative pressure, piezoresistive elements 22 and 28 have the same resistivity as the constant resistive elements 34 and 36. As a result of the voltage dividing action of bridge 12, the voltage at junction 26 will be equal to one-half the source voltage, $V_{cc}$. Likewise, since piezoresistive element 28 and constant resistive element 36 have the same resistivity at zero pressure, the voltage at junction 30 is equal to one-half the source voltage, $V_{cc}$.

An increase in pressure will increase the resistivity of piezoresistive elements 22 and 28. When the resistivity of piezoresistive element 28 is increased, the voltage at junction 30 is also increased. On the other hand, as the resistivity of piezoresistive element 22 is increased, the voltage at junction 26 will decrease. This, in turn, lowers the voltage at junction 46. It can be seen from the above described equation that by increasing the voltage at junction 30 and by decreasing the voltage at junction 46, the output voltage of differential amplifier 54 at junction 64 will linearly increase.

As explained above, by knowing precisely how the input, span, offset or other characteristics of a gain circuit will respond to variations in temperature, it is possible to precisely calculate how the gain of the gain circuit must change in order to compensate for the temperature variations in the gain circuit.

Using the example of the pressure transducer, experience with the pressure transducer shows that as temperature increases, the sensitivity to pressure of piezoresistive elements 22 and 28 decreases in a known and predictable way. Therefore, the output of the pressure transducer varies with temperature in a known and predictable way.

In order to compensate for the decrease in sensitivity of the bridge 12, input resistor $R_{in}$, offset resistor $R_{OFFSET}$, and feedback resistor $R_{FEEDBACK}$ are formed in a single integrated circuit chip with the sensing bridge 12. As shown in FIG. 2, the resistors $R_{in}$, $R_{OFFSET}$ and $R_f$ are formed of thin film polysilicon on the same substrate as the sensing structure 12. While formation of these resistors on the same substrate is not an absolute necessity, it is desirable because this will insure that the gain circuit (which provides the temperature compensation) is subject to the same temperature variations as the circuit for which the gain circuit is performing the temperature compensation.

The resistors have been implanted on the substrate of the sensing structure 12 so that the resistivity of input resistor $R_{in}$ will decrease, and the resistivity of feedback resistor $R_f$ and offset resistor $R_{OFFSET}$ will increase when the sensing bridge 12 is subjected to an increase in temperature.

Referring back to the above described equation, an increase in the resistivity of feedback resistor $R_f$ and offset resistor $R_{OFFSET}$ coupled with a decrease in resistivity of input resistor $R_{in}$ will result in an increase in the gain of differential amplifier 54. The result is an increase in the output voltage of differential amplifier 54 at junction 64.

A decrease in temperature will result in input resistor $R_{in}$ increasing in resistivity and feedback resistor $R_f$ and offset resistor $R_{OFFSET}$ decreasing in resistivity. This in turn decreases the gain of differential amplifier 54 according to the above described equation.

By choosing the implant levels of input resistor $R_{in}$, feedback resistor $R_f$, and offset resistor $R_{OFFSET}$ properly, the gain is designed to increase or decrease with ambient temperature fluctuations and in accordance with the change in sensitivity of the sensing bridge 12 over the temperature range thereby compensating for the temperature induced changes in the pressure transducer 10. While it is anticipated that it would be desirable to change the gain linearly in response to temperature fluctuations, it is also possible to select the resistors $R_f$ and $R_{in}$ so that the gain varies non-linearly with respect to changes in temperature thereby producing an amplifier output that varies with temperature in a predetermined way. Such a design could be utilized to accommodate the signal conditioning circuitry (not shown) to which the OUTPUT of the gain circuit 5 is connected. While other dopants such as boron, arsenic and antimony may be appropriate, in the embodiment shown in the drawings, $R_f$ and $R_{OFFSET}$ have impedance values of approximately twenty (20) ohms/square at 25°C and are doped with $1.8 \times 10^{16} cm^{-3}$ phosphorous at 80keV and $R_{in}$ has an impedance value of approximately 125 ohms/square and is doped with $2.0 \times 10^{15} cm^{-3}$ phosphorous at 80keV. Thus, the implant levels of each resistor are chosen such that the voltage at junction 64 will remain constant as long as the pressure on the sensing bridge 12 is constant. The number of squares required will depend upon the sensitivity of the sensor bridge and the sensitivity is dependent upon the physical geometries and mechanical characteristics of the microstructures disclosed in U.S. Patent Nos. 4,744,863; 4,853,669; and 4,996,082. In any event, the output of the gain circuit 5 on line 68 is independent of temperature.

Other features and advantages of the invention are set forth in the following claims.

## Claims

1. A transducer circuit which generates an amplified signal in response to a stimulus and functionally related to the stimulus, the transducer circuit comprising:

   a sensing bridge adapted to be operatively connected to a power source, the sensing bridge providing a differential voltage output functionally related to the stimulus;

   an amplifier for amplifying the differential voltage output of the sensing bridge and providing an amplified signal as an output; and

   fewer than seven resistors requiring trimming.

2. The transducer circuit of claim 1 wherein the amplifier, the sensing bridge and the resistors are formed on a single substrate such that the entire transducer circuit is formed on the substrate.

3. The transducer circuit of claim 1 wherein the sensing bridge includes at least two sensing elements.

4. The transducer circuit of claim 3 wherein the sensing elements are piezoresistors and wherein the resistance of the piezoresistors varies in response to pressure applied to the piezoresistors such that the differential voltage output of the sensing bridge is functionally related to the pressure on the piezoresistors.

5. The transducer circuit of claim 3 wherein the sensing elements are integrated resistors and wherein the resistance of the resistors varies in relation to the temperature of the resistors such that the differential voltage output of the sensing bridge is functionally related to the temperature of the resistors.

6. The transducer circuit of claim 1 further comprising a buffer amplifier operatively connected to the sensing bridge and to the amplifier so as to buffer the differential output voltage of the sensing bridge.

7. The transducer circuit of claim 1 wherein the circuit includes no more than two resistors requiring laser trimming.

8. The transducer circuit of claim 1 wherein the gain of the amplifier is defined by an input resistor, and a feedback resistor, and wherein the offset resistor and the feedback resistor are operatively associated with a feedback path for the amplifier.

9. The transducer circuit of claim 8 wherein the resistance of the offset resistor is substantially equal to the resistance of the feedback resistor.

10. A transducer circuit which generates an amplified signal functionally related to a stimulus, the transducer circuit comprising:

a sensing bridge adapted to be operatively connected to a power source, and generating a sensing bridge output functionally related to the stimulus;

an amplifier for amplifying the sensing bridge output and providing an amplified signal as an output; and

no more than three resistors formed on a substrate to bias the amplifier; and

fewer than seven resistors in the transducer circuit requiring trimming.

11. A transducer circuit of claim 10 wherein the sensing bridge, the amplifier, and the resistors are formed on the substrate such that the entire transducer circuit is on the substrate.

12. The transducer circuit of claim 10 wherein the sensing bridge includes at least two sensing elements.

13. The transducer circuit of claim 12 wherein the sensing elements are piezoresistors and wherein the resistance of the piezoresistors varies in response to pressure applied to the piezoresistors such that the differential voltage output of the sensing bridge is functionally related to the pressure on the piezoresistors.

14. The transducer circuit of claim 12 wherein the sensing elements are integrated resistors and wherein the resistance of the resistors varies in relation to the temperature of the resistors such that the differential voltage output of the sensing bridge is functionally related to the temperature of the resistors.

15. The transducer circuit of claim 10 wherein the resistance of two of the resistive elements are substantially equal.

16. The transducer circuit of claim 10 wherein the circuit includes no more than two resistors requiring trimming.

17. A transducer circuit which generates an amplified signal having a magnitude functionally related to a stimulus, the transducer circuit comprising:

a sensing bridge formed on a substrate and adapted to be operatively connected to a power source, the sensing bridge generating first and second output voltages functionally related to the stimulus and including first and second resistive sensing elements such that the resistance of the sensing elements varies in response to the stimulus to vary the first and second output voltages, respectively;

no more than one buffer formed on the substrate, the buffer having an output junction and being connected to the sensing bridge to receive the first output voltage as an input and generate a buffer output on the output junction so as to prevent excess current loading of the sensing bridge;

no more than one amplifier formed on the substrate and having a first input connected to the buffer output junction and a second input connected to the sensing bridge to receive the second output voltage such that the amplifier amplifies the difference between the first and second output voltages and provides an amplified output functionally related to the stimulus;

a plurality of resistive elements formed on the substrate such that the entire transducer circuit is on the substrate, and wherein the resistive elements are operatively connected to the amplifier such that each resistor has a predetermined resistance to define the gain of the amplifier and wherein the circuit includes no more than two resistors requiring trimming.

18. The transducer circuit of claim 17 wherein the sensing elements are piezoresistors and wherein the resistance of the sensing elements varies in response to pressure applied to the piezoresistors such that the differential voltage output of the sensing bridge is functionally related to the pressure on the piezoresistors.

19. The transducer circuit of claim 17 wherein the sensing elements are integrated resistors and wherein the resistance of the sensing elements varies in relation to the temperature of the resistors such that the differential voltage output of the sensing bridge is functionally related to the temperature of the resistors.

# FIG. I

EP 0 677 725 A1

# FIG. 2

EP 0 677 725 A1

FIG. 3

**European Patent Office**

## EUROPEAN SEARCH REPORT

Application Number

EP 95 40 0830

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | EP-A-0 164 862 (TOKYO ELECTRIC)<br><br>* claims; figures * | 1-4,8, 10-13, 15,17,18 | G01L1/22<br>G01D18/00<br>G01K7/20 |
| Y | --- | 5,14,19 | |
| X | DE-A-40 41 621 (BOSCH) | 1,2,7,8, 10,11, 13,16-18 | |
| Y | * the whole document *<br>--- | 5,14,19 | |
| X | PATENT ABSTRACTS OF JAPAN<br>vol. 16 no. 200 (E-1201) ,3 February 1992<br>& JP-A-04 030478 (MITSUBISHI) 3 February 1992,<br>* abstract * | 1-4,7,8, 10-13, 16-18 | |
| Y | ---<br>US-A-3 882 725 (RAO ET AL)<br>* abstract * | 5,14,19 | |
| A | ---<br>DE-A-27 53 843 (AUERGESLLSCHAFT)<br>* abstract *<br>----- | 6,17 | **TECHNICAL FIELDS SEARCHED** (Int.Cl.6)<br><br>G01L<br>G01D<br>G01K |

The present search report has been drawn up for all claims

| Place of search | Date of completion of the search | Examiner |
|---|---|---|
| THE HAGUE | 12 July 1995 | Lloyd, P |